# EUROPEAN PATENT APPLICATION

(11) **EP 4 782 237 A1**
(43) Date of publication of application: **29.07.2026**
(21) Application number: 24884950.7
(22) Date of filing: 01.11.2024
(51) Int. Cl.: B60J 1/00

(54) **VEHICLE WINDOW ASSEMBLY AND VEHICLE**

(30) Priority: 02.11.2023 CN 202311449687
(71) Applicant: Fuyao Glass Industry Group Co., Ltd., Fuqing, Fujian 350300 (CN)
(72) Inventor: SHANG, Guicai, Fuqing, Fujian 350300 (CN); CHEN, Xinghao, Fuqing, Fujian 350300 (CN); TAO, Juan, Fuqing, Fujian 350300 (CN)
(74) Representative: Gill Jennings & Every LLP
(86) International application number: PCT/CN2024/129230
(87) International publication number: WO 2025/092952

(57) **Abstract**

The present application relates to a vehicle window assembly and a vehicle. The vehicle window assembly comprises: a vehicle window glass (10) and a laser radar (20). The vehicle window glass (10) is provided with an information acquisition region; the laser radar (20) is arranged on the side of the vehicle window glass (10) facing the interior of the vehicle, the laser radar (20) faces the vehicle window glass (10) and corresponds to the position of the information acquisition region, the laser radar (20) comprises a housing (21), the housing (21) comprises a front panel (211), and the front panel (211) is parallel to the vehicle window glass (10). Because the front panel (211) is parallel to the vehicle window glass (10), the distance between the housing (21) and the vehicle window glass (10) can be designed to be very small, so that the area of the information acquisition region of the vehicle window glass (10) is reduced, and the area of an anti-reflection film (11) is accordingly reduced, reducing the film coating cost, and saving more space for other functional integrated devices such as infrared cameras and millimeter wave LiDAR and other auxiliary driving functional devices, thus greatly reducing the assembly difficulty.

## Description

### CROSS-REFERENCE TO RELATED APPLICATIONS

This application claims priority to Chinese Patent Application No. 2023114496872, filed on November 2, 2023, entitled "VEHICLE WINDOW ASSEMBLY AND VEHICLE", the entire content of which is incorporated herein by reference in its entirety.

### TECHNICAL FIELD

The present application relates to the technical field of transportation vehicles, and in particular to a vehicle window assembly and a vehicle.

### BACKGROUND

Light detection and ranging, also known as LIDAR, is a sensor based on noncontact laser ranging technology, which consists of three main parts: a transmitting system, a receiving system, and an information processing system. The LIDAR is a key perception hardware for the application of L3-level and above autonomous driving vehicles. The LIDAR can achieve a detection range of up to 500 meters, has high measurement accuracy, and is not limited by lighting conditions, which can significantly improve the reliability of autonomous driving systems.

In related technologies, the LIDAR is generally applied externally and mounted on the vehicle roof. However, external LIDAR solutions have disadvantages, such as large size and weight, susceptibility to harsh weather conditions, such as rain and snow, impact from gravel, high wind resistance, and difficulties in anti-fog and defrosting. In view of the aforementioned shortcomings, a proposal has been made to mount the LIDAR inside the vehicle, i.e., the LIDAR is placed on an inner side of the front windshield. However, this solution also has many technical difficulties, such as the attenuation of the penetration of LIDAR signals by the front windshield structure, the realization of anti-reflection function under large-angle incidence of specific wavelengths, the formulation of industrialization plans, and the installation of LIDAR when it is built-in. These difficulties make it difficult to meet the actual requirements for signal transmission and reception, and the cost is also high.

### SUMMARY

According to various embodiments of the present application, a vehicle window assembly and a vehicle are provided.

The present application provides a vehicle window assembly, which includes:
a vehicle window glass provided with an information acquisition region; and
a light detection and ranging (LIDAR) arranged on a side of the vehicle window glass facing an interior of a vehicle, wherein the LIDAR is oriented to the vehicle window glass and corresponds to the information acquisition region, the LIDAR includes a housing, and the housing includes a front panel parallel to the vehicle window glass.

In one embodiment, a distance X between the front panel of the LIDAR and the vehicle window glass is in a range of 1 mm to 5 mm.

In one embodiment, the LIDAR further includes a transreceiver provided inside the housing, a distance between a center of the transreceiver and a center of the front panel is in a range of 30 mm to 75 mm, and a distance from the center of the transreceiver and the vehicle window glass is in a range of 31 mm to 80 mm.

In one embodiment, a horizontal FOV of the LIDAR is set to be [-α, α], a vertical FOV is set to be [-β, β], α is 45° to 75°, and β is 8° to 15°.

In one embodiment, detection signals transmitted and received by the LIDAR pass through the vehicle window glass, an area of a projection region formed by the detection signals of the LIDAR on a surface of the vehicle window glass is defined as S, and the area S satisfies the following calculation formula:

The area S = [(40+X)*tanα*2]*[(40+X)*tanβ*2]÷cos(90°-θ), wherein * is a multiplication sign, θ is a mounting angle of the vehicle window glass, and X is the distance between the front panel of the LIDAR and the vehicle window glass.

In one embodiment, the area S is set to be 3500 mm² to 10000 mm².

In one embodiment, the information acquisition region of the vehicle window glass is provided with an anti-reflection film, the anti-reflection film has a trapezoidal shape, a length of a top edge of the anti-reflection film is in a range of 2 cm to 10 cm, a length of a bottom edge of the anti-reflection film is in a range of 7 cm to 26 cm, and a distance between the top edge and the bottom edge of the anti-reflection film is in a range of 4 cm to 11 cm.

In one embodiment, a width of the housing of the LIDAR is defined as W, a depth of the housing is defined as D, and a height of the housing is defined as H, W is in a range of 100 mm to 200 mm, D in a range of is 60 mm to 150 mm, and H is in a range of 15 mm to 50 mm.

In one embodiment, W is in a range of 120 mm to 150 mm, D is in a range of 80 mm to 120 mm, and H in a range of is 25 mm to 40 mm.

In one embodiment, a side of the housing of the LIDAR facing the vehicle window glass is provided with an opening and is sealingly attached to the vehicle window glass, and a portion of the vehicle window glass configured to be sealingly attached to the opening of the LIDAR is the front panel.

In one embodiment, the LIDAR is a semi-solid-state LIDAR.

Details of one or more embodiments of the present application are set forth in the following drawings and descriptions. Other features, objects and advantages of the present application will become apparent from the description, drawings, and claims.

### BRIEF DESCRIPTION OF THE DRAWINGS

FIG. 1 is a schematic structural view of a vehicle window assembly according to an embodiment of the present application.
FIG. 2 is a schematic structural view of a vehicle window assembly according to another embodiment of the present application.
FIG. 3 is a schematic structural view of a vehicle window assembly according to an embodiment of the related art.

10, Vehicle window glass; 11, Anti-reflection film; 20, LIDAR; 21, Housing; 211, Front panel; 212, Bottom panel; 22, Transreceiver.

### DETAILED DESCRIPTION OF THE EMBODIMENTS

In order to make the aforementioned objects, features and advantages of the present application more apparent, the embodiments of the present application are described below in detail with reference to the accompanying drawings. In the following description, numerous specific details are set forth, so as to provide a thorough understanding of the present application. However, the present application may be implemented in many ways different from those described herein, those skilled in the art may make similar improvements without departing from the essence of the present application, and therefore, the present application is not limited to the examples disclosed below.

As described in the background, when the LIDAR is mounted inside the vehicle, there are many technical difficulties, such as the attenuation of the penetration of LIDAR signals by the front windshield structure, the realization of anti-reflection function under large-angle incidence of specific wavelengths, the formulation of industrialization plans, and the installation of LIDAR when it is built-in. These difficulties make it difficult to meet the actual requirements for signal transmission and reception, and the cost is also high. Through research, the inventors have found that the reason for these problems is that after the LIDAR is mounted inside the vehicle, a signal transmittance of the LIDAR suffers loss through the front windshield. Therefore, it is necessary to provide an anti-reflection (AR) film in a projection region of the LIDAR signal on the front windshield to improve the signal transmittance. However, if a region of the front windshield where the AR film is provided is too large, it will occupy a primary viewing region or a region of a camera, which will lead to installation difficulties and a significant increase in the coating cost.

In view of the aforementioned reasons, the present application provides a vehicle window assembly and a vehicle that can meet the actual requirements of signal transmission and reception while reducing costs.

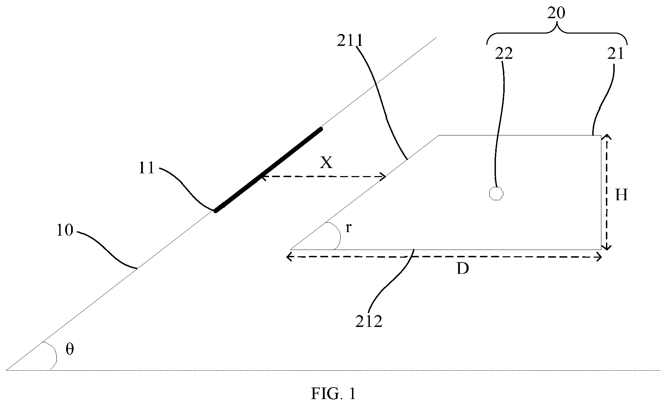

Referring to FIG. 1, FIG. 1 shows a schematic structural view of a vehicle window assembly according to an embodiment of the present application. A vehicle window assembly according to an embodiment of the present application includes a vehicle window glass 10 and a LIDAR 20. The vehicle window glass 10 is provided with an information acquisition region. The LIDAR 20 is arranged on a side of the vehicle window glass 10 facing an interior of a vehicle. The LIDAR 20 is oriented to the vehicle window glass 10 and corresponds to the information acquisition region. The housing 21 includes a front panel 211 parallel to the vehicle window glass 10.

It should be noted that the term "parallel" is not strictly parallel in a mathematical sense, but means visually parallel, allowing a deviation of up to 10 degrees.

In this way, since the front panel 211 is parallel to the vehicle window glass 10, a distance between the housing 21 and the vehicle window glass 10 can be designed to be very small, so that an area of the information acquisition region of the vehicle window glass 10 is reduced, and an area of the anti-reflection film 11 is correspondingly reduced, thereby reducing the coating cost and saving more space for other functional integrated devices, such as infrared cameras, millimeter-wave LIDAR, and other driver assistance functional devices, thus greatly reducing the assembly difficulty.

In one embodiment, the information acquisition region of the vehicle window glass 10 is provided with an anti-reflection film 11.

It should be noted that the anti-reflection film 11 mainly functions to reduce or eliminate reflected light from an optical surface of the vehicle window glass 10, thereby increasing a light transmittance of these elements and reducing or eliminating stray light in the system. For example, the anti-reflection film 11 includes a plurality of high refractive index layers and a plurality of low refractive index layers stacked on each other.

In some embodiments, the anti-reflection film 11 is designed and coated according to a corresponding requirement of a detection signal of the LIDAR 20. The plurality of high refractive index layers and the plurality of low refractive index layers are stacked alternately in sequence, i.e., one low refractive index layer is stacked between every two adjacent high refractive index layers, and one high refractive index layer is stacked between every two adjacent low refractive index layers. A signal source of the LIDAR 20 is a single-point wavelength between 800 nm and 1600 nm. A wavelength commonly used is generally set to be 905 nm, 1550 nm, or other values according to different LIDARs 20.

When the detection signals of the LIDAR 20 pass through the vehicle window glass 10 located in front of the LIDAR 20, the vehicle window glass 10 will cause a certain degree of loss to the detection signals of the LIDAR 20. As a comparative example, when no vehicle window glass 10 is provided in front of the LIDAR 20, a ranging capability of the LIDAR 20 (for 10% reflective target) is 150 m to 250 m. When the vehicle window glass 10 is provided in front of the LIDAR 20, due to the anti-reflection film 11 provided on the vehicle window glass 10, the ranging capability of the LIDAR 20 (for 10% reflective target) can still reach more than 150 m.

In one embodiment, the vehicle window glass 10 includes a first light-transmitting plate, an adhesive layer, and a second light-transmitting plate that are stacked and connected in sequence. The first light-transmitting plate has a first surface and a second surface arranged opposite to each other, and the second light-transmitting plate has a third surface and a fourth surface arranged opposite to each other. The first surface faces an exterior of the vehicle, and the fourth surface faces the interior of the vehicle. The second surface and the third surface are opposite to each other. The anti-reflection film 11 is arranged on the first surface, the second surface, the third surface, or the fourth surface. Preferably, the anti-reflection film 11 is arranged on the fourth surface.

Optionally, the adhesive layer may be, for example, a coating or film layer, specifically a transparent film with a sound insulation function, a heat insulation function, or both the sound insulation function and the heat insulation function. The adhesive layer is configured to bond and fix the first light-transmitting plate and the second light-transmitting plate, with a thickness of, for example, 0.38 mm to 0.76 mm. The adhesive layer can be made of materials such as polyvinyl butyral (PVB), polycarbonate (PC), sound insulation PVB, light-shielding tape PVB, heat control PVB, ethylene vinyl acetate (EVA), thermoplastic polyurethane (TPU), ionomers, thermoplastic materials, polybutylene terephthalate (PBT), polyethylene vinyl acetate (PET), polyethylene naphthalate (PEN), polyvinyl chloride (PVC), polyvinyl fluoride (PVF), polyacrylate (PA), polymethyl methacrylate (PMMA), polyurethane (PUR), and combinations thereof.

In one embodiment, referring to FIG. 1, the distance X between the front panel 211 and the vehicle window glass 10 is set to be 1 mm to 5 mm. Specifically, X is, for example, 1 mm, 1.5 mm, 2 mm, 2.5 mm, 3 mm, 3.5 mm, 4 mm, 4.5 mm, 5 mm, etc., or X can be set to be any value less than 1 mm and greater than 5 mm according to actual needs. Preferably, the distance X between the front panel 211 and the vehicle window glass 10 is in a range of 1 mm to 3 mm.

In one embodiment, the LIDAR 20 further includes a transreceiver 22 provided inside the housing 21. A distance between a center of the transreceiver 22 and a center of the front panel 211 is in a range of 30 mm to 75 mm. A distance between the center of the transreceiver 22 and the vehicle window glass 10 is in a range of 31 mm to 80 mm.

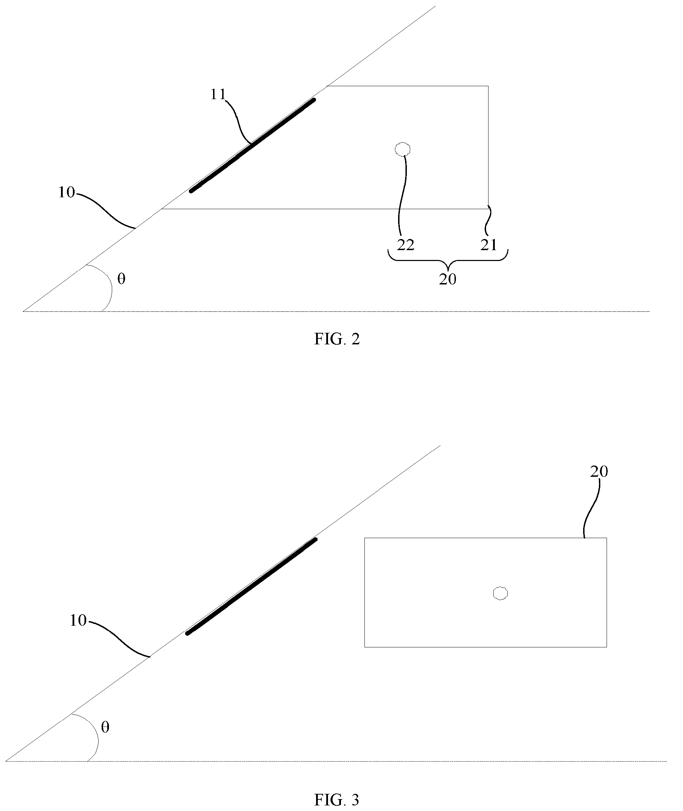

Referring to FIG. 1, in one embodiment, the housing 21 further includes a bottom panel 212. The front panel 211 is connected to the bottom panel 212 and forms an angle with the bottom panel 212. The bottom panel 212 is, for example, parallel to a horizontal plane, i.e., the bottom panel 212 is usually mounted horizontally. The angle formed by the front panel 211 and the bottom panel 212 is defined as r, and the angle r is the same as a mounting angle θ of the vehicle window glass 10. Compared to an arrangement of the front panel 211 perpendicular to the bottom panel 212 in related technology (for example, as shown in FIG. 3), in this embodiment, when the LIDAR 20 is mounted, the distance between the front panel 211 and the vehicle window glass 10 can be greatly reduced.

In one embodiment, the transreceiver 22 (sensor) of the LIDAR 20 is provided at, but not limited to, the center of the housing of the LIDAR 20.

In one embodiment, a horizontal FOV (Field of view) of the LIDAR 20 is set to be [-α, α], and a vertical FOV is set to be [-β, β]. α is 45° to 75°, specifically, for example, 45°, 50°, 55°, 60°, 65°, 70°, 75°, etc. In addition, β is 8° to 15°, specifically, for example, 8°, 10°, 12°, 13°, 15°, etc.

Referring to FIG. 1, in one embodiment, an area S of a projection region formed by the detection signals of the LIDAR 20 on the surface of the vehicle window glass 10 satisfies the following calculation formula:

The area S = [(40+X)*tanα*2]*[(40+X)*tanβ*2]÷ cos(90°-θ), wherein * is a multiplication sign, θ is the mounting angle of the vehicle window glass 10, i.e., an angle between the vehicle window glass 10 and the horizontal plane, and X is the distance between the front panel 211 of the LIDAR 20 and the vehicle window glass 10.

In some embodiments, the vehicle window glass 10 is, for example, a front windshield, and θ is set to be, for example, 18° to 35°, or θ is adjusted and set to be other values according to actual needs.

In the aforementioned vehicle window assembly, the area S of the projection region formed by the detection signal of the LIDAR 20 on the surface of the vehicle window glass 10 is 3500 mm² to 10000 mm², which is sufficiently small. The area S is sufficiently small, so that there is sufficient space to provide the anti-reflection film 11 on the vehicle window glass 10 to meet the actual requirements of signal transmission and reception. Moreover, the area of the anti-reflection film 11 provided on the vehicle window glass 10 is relatively small, which can avoid the anti-reflection film 11 from occupying the primary viewing region or a region of a camera, making installation easier, while reducing the coating cost.

In some embodiments, the area S is, but is not limited to, 3500 mm², 4000 mm², 4500 mm², 5000 mm², 5500 mm², 5800 mm², 6000 mm², 6500 mm², 7000 mm², 7500 mm², 8000 mm², 8500 mm², 9000 mm², 9500 mm², 10000 mm², etc., which can be flexibly adjusted and set according to actual needs.

In one embodiment, under the same FOV angle, the LIDAR 20 in this embodiment has a relatively smaller projection area S on the vehicle window glass 10. According to simulation calculations, when the horizontal distance X is set to be 1 mm and the mounting angle θ is 30°, the projection area S is approximately 5000 mm², which is one-third of the projection area of the LIDAR 20 in related technology (for example, as shown in FIG. 3) on the vehicle window glass 10. That is, the projection area S is greatly reduced, i.e., the area of the information acquisition region is greatly reduced.

In some embodiments, a shape of the anti-reflection film 11 is, but is not limited to, regular shapes such as trapezoid, rectangle, circle, ellipse, or irregular shapes, which can be flexibly adjusted and set according to actual needs.

In one embodiment, the anti-reflection film 11 has a trapezoidal shape. A length of a top edge of the anti-reflection film 11 is in a range of 2 cm to 10 cm, a length of a bottom edge of the anti-reflection film 11 is in a range of 7 cm to 26cm, and a distance between the top edge and the bottom edge of the anti-reflection film 11 is in a range of 4 cm to 11 cm. In this way, the size design of the anti-reflection film 11 is relatively reasonable. On the one hand, the design size of the anti-reflection film 11 is large enough to completely cover the information acquisition region to meet the actual requirements of signal transmission and reception. On the other hand, the design size of the anti-reflection film 11 is not too large to avoid increasing the coating cost.

In some embodiments, the length of the top edge of the anti-reflection film 11 is, for example, 2 cm, 5 cm, 7 cm, 10 cm. In addition, the length of the bottom edge of the anti-reflection film 11 is greater than the length of the top edge of the anti-reflection film 11, for example, the length of the bottom edge of the anti-reflection film 11 is 7 cm, 10 cm, 15 cm, 20 cm, or 26 cm. In addition, the distance between the top edge and the bottom edge of the anti-reflection film 11, i.e., a height of the trapezoid, is, for example, 4 cm, 6 cm, 8 cm, 10 cm, or 11 cm.

Referring to FIG. 1, in one embodiment, a width of the housing 21 of the LIDAR 20 is defined as W, a depth of the housing 21 is defined as D, and a height of the housing 21 is defined as H. W is in a range of 100 mm to 200 mm, specifically, for example, 100 mm, 130 mm, 140 mm, 160 mm, 170 mm, 200 mm, etc., or W can be any value other than 100 mm to 200 mm. D is in a range of 60 mm to 150 mm, specifically, for example, 60 mm, 80 mm, 100 mm, 120 mm, 140 mm, 150 mm, etc., or D can be any value other than 60 mm to 150 mm. H is in a range of 15mm to 50mm, specifically, for example, 15mm, 20mm, 35mm, 40mm, 45mm, 50mm, etc., or H can be any value other than 15 mm to 50mm.

In one specific embodiment, W is in a range of 120 mm to 150 mm, D is in a range of 80 mm to 120 mm, and H is in a range of 25 mm to 40 mm. It can be seen that when designing the housing 21 of the LIDAR 20, the depth D is designed to be relatively small, while the width W is designed to be relatively large. In this way, a length of the LIDAR 20 extending along a depth direction is reduced, thereby reducing the space occupied in the vehicle cabin. The extension of the dimension W in the width direction can compensate for the shortening in the depth direction in terms of volume, so as to meet the space requirements of internal components of the LIDAR 20.

In some embodiments, the LIDAR 20 is configured as an automotive-grade LIDAR, which has a high level of product quality and performance.

In some embodiments, the LIDAR 20 has various forms, such as semi-solid-state LIDAR, pure solid-state LIDAR, and mechanical LIDAR.

Among them, the mechanical LIDAR is the earliest type of LIDAR used in autonomous driving. Its characteristic is that a laser generator is arranged vertically and can rotate 360° to perform a comprehensive scan of the surrounding environment. The mechanical LIDAR can perform 3D scanning through physical rotation, comprehensively covering the surrounding environment to form a point cloud. The point cloud is a dataset of spatial points obtained by LIDAR scanning. Each point includes three-dimensional coordinate information (X, Y, Z) and laser reflection intensity information, etc., which is used to create 3D maps. However, the high-frequency rotation and complex mechanical structure result in an average failure time of only 1000 to 3000 hours, which is difficult to meet the minimum requirement of 13000 hours for automotive-grade devices. In addition, the mechanical LIDAR needs to be arranged at the highest point of the vehicle body to avoid obstruction, which greatly affects the vehicle's shape, and the protruding LIDAR is also more easily damaged. Arranging LIDAR and other equipment on the roof, as well as reinforcing structures, can easily affect the vehicle's center of gravity. In addition, the complex structure of mechanical LIDAR results in high cost.

Referring to FIG. 1, in one embodiment, the LIDAR 20 is a semi-solid-state LIDAR. In this way, the semi-solid-state LIDAR is a compromise between a pure solid-state LIDAR and a mechanical LIDAR. Compared to the mechanical LIDAR, the semi-solid-state LIDAR only scans a range within a certain angle in front, and compared to the pure solid-state LIDAR, the semi-solid-state LIDAR also has some smaller moving portions. Furthermore, the semi-solid-state LIDAR is easier to control in terms of cost and size, making it more suitable for application in autonomous vehicles under the current technological and industrial context.

In one embodiment, the semi-solid-state LIDAR, also known as hybrid LIDAR or quasi-solid state LIDAR, has various solutions, including but not limited to a product of the LIDAR 20 implemented in different forms such as MEMS galvanometers, rotating mirrors, and prisms.

In some embodiments, a resolution of the LIDAR 20 is between 0.1° * 0.1° and 0.2° * 0.2°.

In some embodiments, a weight of the LIDAR 20 is set to be 350 g to 600g, preferably 350g to 450 g.

In some embodiments, an operating power of the LIDAR 20 is between 10W and 12W.

Examples and comparative examples: The vehicle window assembly having the structure shown in FIG. 1 and the vehicle window assembly in the related art shown in FIG. 3 are compared and analyzed. Taking the semi-solid-state LIDAR 20 as an example, the product specifications are 130 mm (width W) * 80 mm (depth D) * 35 mm (height H), and the transreceiver 22 is located at the center of the housing 21. The field of view of the LIDAR 20 is as follows: horizontal field of view α: ±60°, vertical field of view β: ±12°. The projection area S = [(40+x)*tan60°*2]*[(40+x)*tan12°*2]÷cos(90°-θ), and the following table is obtained.

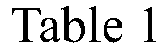

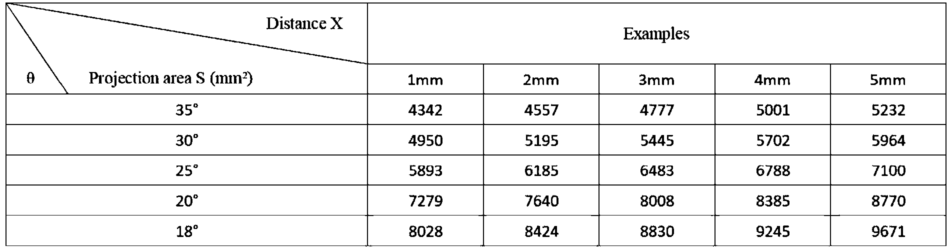

**Table 2**

| Comparative examples | | |
|---|---|---|
| θ | Distance X | Projection area S (mm²) |
| 35° | 25mm | 10906 |
| 30° | 30mm | 14434 |
| 25° | 37mm | 21025 |
| 20° | 48.5mm | 33559 |
| 18° | 54mm | 42197 |

By analyzing the tables above, it can be clearly seen that the area S of the projection region formed by the detection signal of the LIDAR 20 on the surface of the vehicle window glass 10 is 3500 mm² to 10000 mm², which is sufficiently small. When θ is the same, as the distance X increases, the projection area S increases accordingly.

In the comparative example, the area S of the projection region formed by the detection signal of the LIDAR 20 on the surface of the vehicle window glass 10 is greater than 10000 mm².

Referring to FIG. 2, FIG. 2 shows a schematic structural view of a vehicle window assembly according to another embodiment of the present application. In one embodiment, a side of the housing 21 of the LIDAR 20 facing the vehicle window glass 10 is provided with an opening and is sealingly attached to the vehicle window glass 10. A portion of the vehicle window glass 10 configured to be sealingly attached to the opening of the LIDAR 20 is the front panel 211. In this way, the transreceiver of the LIDAR 20 can be placed closer to the vehicle window glass 10, so that the projection area S is smaller and is easier to adjust. In addition, the housing 21 of this embodiment has high waterproof, dustproof, soundproof, and heat dissipation performance, which can better protect the core components of the LIDAR 20 from the influence of the interior environment of the vehicle, dust, etc., thereby extending the service life of the LIDAR 20. In addition, it can reduce the attenuation of the detection signal of the LIDAR 20 by absorption and reflection, which is more conducive to increasing the detection range of the LIDAR 20. It can also further reduce the cost of the product of LIDAR 20 and play a certain role in weight reduction.

In one embodiment, a vehicle includes a vehicle window assembly according to any of the above embodiments.

In the aforementioned vehicle, since the front panel 211 is parallel to the vehicle window glass 10, the distance X between the housing 21 and the vehicle window glass 10 can be designed to be very small, for example, the distance X is designed to be 1 mm to 5 mm, so that the area of the information acquisition region of the vehicle window glass 10 is reduced, and the area of the anti-reflection film 11 is correspondingly reduced, thereby reducing the coating cost and saving more space for other integrated functional devices, such as infrared cameras, millimeter-wave LIDAR, and other driver assistance functional devices, thus greatly reducing the assembly difficulty.

In the present application, unless otherwise expressly specified and limited, the terms "mount", "connect", "couple", "fix" and the like should be interpreted broadly. For example, the terms can mean fixed connection, detachable connection, or being integrated. The terms can mean mechanical connection or electrical connection. The terms can mean directly connection or indirectly connection through an intermediate medium. The terms can mean connection within two elements or interaction relationship between two elements, unless otherwise expressly limited. For those skilled in the art, the specific meaning of the above terms in the present application should be understood according to the specific situation.

In the present application, unless otherwise expressly specified and limited, a first feature "above" or "below" a second feature may be in direct contact with the second feature, or the first and second features may be in indirect contact through an intermediate medium. Moreover, the first feature "above" the second feature may be right above or obliquely above the second feature, or the first feature may be merely located at a height higher than the second feature. The first feature "below" the second feature may be right below or obliquely below the second feature, or the first feature may be merely located at a height lower than that of the second feature.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the protection scope of the present application should be subject to the appended claims.

## Claims

1. A vehicle window assembly, comprising:
a vehicle window glass provided with an information acquisition region; and
a light detection and ranging (LIDAR) arranged on a side of the vehicle window glass facing an interior of a vehicle, wherein the LIDAR is oriented to the vehicle window glass and corresponds to the information acquisition region, the LIDAR comprises a housing, and the housing comprises a front panel parallel to the vehicle window glass.

2. The vehicle window assembly according to claim 1, wherein a distance X between the front panel of the LIDAR and the vehicle window glass is in a range of 1 mm to 5 mm.

3. The vehicle window assembly according to claim 2, wherein the LIDARfurther comprises a transreceiver provided inside the housing, a distance between a center of the transreceiver and a center of the front panel is in a range of 30 mm to 75 mm, and a distance from the center of the transreceiver and the vehicle window glass is in a range of 31mm to 80 mm.

4. The vehicle window assembly according to claim 2 or 3, wherein a horizontal FOV of the LIDAR is set to be [-α, α], a vertical FOV is set to be [-β, β], α is 45° to 75°, and β is 8° to 15°.

5. The vehicle window assembly according to claim 4, wherein detection signals transmitted and received by the LIDAR pass through the vehicle window glass, an area of a projection region formed by the detection signals of the LIDAR on a surface of the vehicle window glass is defined as S, and the area S satisfies the following calculation formula:
the area S = [(40+X)*tanα*2]*[(40+X)*tanβ*2]÷cos(90°-θ), wherein * is a multiplication sign, θ is a mounting angle of the vehicle window glass, and X is the distance between the front panel of the LIDAR and the vehicle window glass.

6. The vehicle window assembly according to claim 5, wherein the area S is set to be 3500 mm² to 10000 mm².

7. The vehicle window assembly according to any one of claims 4 to 6, wherein the information acquisition region of the vehicle window glass is provided with an anti-reflection film, the anti-reflection film has a trapezoidal shape, a length of a top edge of the anti-reflection film is in a range of 2 cm to 10 cm, a length of a bottom edge of the anti-reflection film is in a range of 7 cm to 26 cm, and a distance between the top edge and the bottom edge of the anti-reflection film is in a range of 4 cm to 11 cm.

8. The vehicle window assembly according to any one of claims 4 to 7, wherein a width of the housing of the LIDAR is defined as W, a depth of the housing is defined as D, and a height of the housing is defined as H, W is in a range of 100 mm to 200 mm, D is in a range of 60 mm to 150 mm, and H is in a range of 15 mm to 50 mm.

9. The vehicle window assembly according to claim 8, wherein W is in a range of 120 mm to 150 mm, D is in a range of 80 mm to 120 mm, and H is in a range of 25 mm to 40 mm.

10. The vehicle window assembly according to any one of claims 1 to 9, wherein a side of the housing of the LIDAR facing the vehicle window glass is provided with an opening and is sealingly attached to the vehicle window glass, and a portion of the vehicle window glass configured to be sealingly attached to the opening of the LIDAR is the front panel.

11. The vehicle window assembly according to any one of claims 1 to 10, wherein the LIDAR is a semi-solid-state LIDAR.

12. A vehicle, comprising the vehicle window assembly according to any one of claims 1 to 11.
